# DEMANDE DE BREVET EUROPEEN

(11) **EP 3 900 872 A1**
(43) Date de publication de la demande: **27.10.2021**
(21) Numéro de dépôt: 21168945.0
(22) Date de dépôt: 16.04.2021
(51) Int. Cl.: B23Q 1/48, B23Q 7/04, B23Q 7/10, B23Q 3/155

(54) **CHARGEUR POUR DONNER ET/OU PRENDRE DES OBJETS À UNE MACHINE ET INSTALLATION COMPRENANT CE CHARGEUR**

(30) Priorité: 23.04.2020 CH 4802020
(71) Demandeur: ICE Engineering SA, 1787 Mur (Vully) VD (CH)
(72) Inventeur: ODIET, Maxime, 1787 Mur (Vully) VD (CH)
(74) Mandataire: Bovard SA Neuchâtel

(57) **Abrégé**

L'invention concerne un chargeur (2) pour donner et/ou prendre des objets à une machine (1). Ce chargeur (2) comprend une tête de saisie et/ou de support d'au moins un objet (P). Il comprend également un guide (31), un coulisseau guidé par le guide (31) selon une direction de guidage montante, ainsi qu'un actionneur à même de déplacer et de positionner le coulisseau le long du guide (31). Un bras (38) est porté directement ou indirectement par le coulisseau et monté à pivotement de manière à pouvoir basculer par rapport à ce coulisseau, autour d'un premier axe de pivotement, non vertical. Un dispositif d'actionnement est à même de faire basculer et de positionner angulairement le bras (38) autour du premier axe de pivotement, par rapport au coulisseau. La tête de saisie et/ou de support est portée par le bras (38), à distance du premier axe de pivotement. Elle est montée à pivotement de manière à pouvoir pivoter par rapport au bras (38), autour d'un deuxième axe de pivotement sensiblement parallèle au premier axe de pivotement.

L'invention concerne également une installation comprenant ce chargeur (2) et une machine (1).

## Description

### Domaine technique de l'invention

La présente invention concerne un chargeur pour donner et/ou prendre des objets à une machine, ainsi qu'une installation comprenant ce chargeur. Par objet, on entend toute ébauche, toute pièce, tout sous-ensemble, tout article fini ou n'importe quelle autre chose matérielle pouvant être saisie et/ou posée.

### État de la technique

Dans divers domaines, des machines sont employées pour réaliser des opérations sur des objets. Un exemple de telles machines est une machine d'usinage à commande numérique utilisée pour réaliser une ou plusieurs formes par enlèvement de matière, sur une ébauche ou une pièce non terminée.

Notamment lorsque la ou les mêmes opérations sont à répéter sur un nombre conséquent d'objets et qu'une machine est prévue pour la ou les effectuer, on peut choisir d'automatiser l'alimentation de cette machine et/ou l'évacuation, hors de la machine, de chaque objet n'ayant plus à y subir d'opération.

Pour alimenter une machine, il est connu d'employer un robot six axes et de lui faire prendre les objets à destination de la machine sur un plateau ou un bac où ces objets sont répartis dans un plan horizontal. Le robot six axes donne chaque objet à la machine après l'avoir saisi et avoir ensuite pivoté sur lui-même autour d'un axe vertical. Cette solution rend indisponible une surface au sol importante.

Un robot cartésien est un robot dans lequel trois mouvements possibles sont trois mouvements en ligne droite chacun guidé selon l'une de trois directions orthogonales entre elles. Il est connu qu'au lieu d'un robot six axes, un robot cartésien peut être prévu pour donner des objets à une machine. Dans un robot cartésien employé comme chargeur, l'une des trois directions selon lesquelles il y a un guidage en ligne droite est verticale afin qu'une tête du robot cartésien puisse descendre, notamment pour aller saisir un objet, et monter. Les deux autres directions selon lesquelles il y a un guidage en ligne droite dans le robot cartésien employé comme chargeur sont parallèles au sol, grâce à quoi la tête peut être déplacée horizontalement. Un robot cartésien employé comme chargeur rend indisponible une surface au sol importante.

### Exposé sommaire de l'invention

L'invention a au moins pour but de permettre une réduction importante de la surface au sol nécessaire pour qu'un chargeur puisse donner et/ou prendre des objets à une machine.

Selon l'invention, ce but est atteint grâce à un chargeur pour donner et/ou prendre des objets à une machine. Ce chargeur comprend une tête de saisie et/ou de support d'au moins un objet, un guide, un coulisseau guidé par le guide selon une direction de guidage montante, un actionneur à même de déplacer et de positionner le coulisseau le long du guide, un bras porté directement ou indirectement par le coulisseau et monté à pivotement de manière à pouvoir basculer par rapport à ce coulisseau, autour d'un premier axe de pivotement non vertical, ainsi qu'un dispositif d'actionnement à même de faire basculer et de positionner angulairement le bras autour du premier axe de pivotement, par rapport au coulisseau. La tête de saisie et/ou de support est portée par le bras, à distance du premier axe de pivotement, et montée à pivotement de manière à pouvoir pivoter par rapport au bras, autour d'un deuxième axe de pivotement sensiblement parallèle au premier axe de pivotement.

Le chargeur selon l'invention a pour avantage de pourvoir posséder une constitution particulièrement simple, notamment comparée à la constitution d'un robot six axes.

Le chargeur selon l'invention est prévu pour prendre et/ou donner des objets à une machine. Il a pour autre avantage de pouvoir être aisément adapté à la taille ou à la géométrie de cette machine si cela est nécessaire. Pour modifier le chargeur selon l'invention de manière à l'adapter à une machine par exemple d'une autre taille, il suffit de remplacer son bras par un bras d'une autre longueur, ce qui est très facile à réaliser. Pour rendre le chargeur selon l'invention réglable de manière à pouvoir être adapté encore plus aisément à un très grand nombre de machines de diverses tailles et/ou de divers types, on choisit que son bras est un bras télescopique. Eventuellement moyennant un remplacement ou un réglage en longueur de son bras, le chargeur selon l'invention peut ainsi être employé avec une gamme très étendue de machines.

Le chargeur défini ci-dessus peut incorporer une ou plusieurs autres caractéristiques avantageuses, isolément ou en combinaison, en particulier parmi celles définies ci-après.

Avantageusement, la direction de guidage est sensiblement verticale.

Avantageusement, le premier axe de pivotement est sensiblement horizontal.

Avantageusement, le dispositif d'actionnement est un premier dispositif d'actionnement, le chargeur comprenant un deuxième dispositif d'actionnement à même de faire pivoter et de positionner angulairement la tête de saisie et/ou de support par rapport au bras, autour du deuxième axe de pivotement.

Avantageusement, au moins une partie du chargeur est déplaçable selon une direction de coulissement non orthogonale au premier axe de pivotement et comprend la tête de saisie et/ou de support.

Avantageusement, l'actionneur est un premier actionneur, le chargeur comportant un deuxième actionneur à même de déplacer et de positionner, selon la direction de coulissement, le chargeur ou la partie déplaçable du chargeur selon cette direction de coulissement.

Avantageusement, le chargeur comporte un charriot porté par le coulisseau et guidé selon la direction de coulissement par rapport au coulisseau, le deuxième actionneur étant à même de déplacer et de positionner le charriot par rapport au coulisseau, selon la direction de coulissement, le bras étant articulé au charriot de manière à pouvoir basculer autour du premier axe de pivotement.

Avantageusement, le chargeur comprend une zone de déchargement d'un objet depuis un magasin de stockage de plusieurs objets, cette zone de déchargement étant à la portée de la tête de saisie et/ou de support.

Avantageusement, le chargeur comporte un plateau rotatif ayant un dessus qui forme la zone de déchargement, le chargeur comportant un système de détermination d'un angle de pivotement entre une position angulaire prédéfinie pour un objet et un exemplaire de cet objet reposant sur le plateau rotatif, et de suppression de cet angle de pivotement par un pivotement du plateau rotatif.

Avantageusement, le chargeur comprend un dispositif de manœuvre à même de manœuvrer au moins un magasin de stockage de plusieurs objets.

Avantageusement, le dispositif de manœuvre comprend le coulisseau, un dispositif d'accouplement temporaire du magasin à ce coulisseau, ainsi que l'actionneur à même de déplacer et de positionner le coulisseau le long du guide.

Avantageusement, le dispositif de manœuvre est à même de faire monter le magasin.

Avantageusement, le dispositif de manœuvre est à même de manœuvrer le magasin au moins selon une direction sensiblement verticale.

Avantageusement, le dispositif de manœuvre est à même de manœuvrer le magasin au moins selon deux directions dont une est sensiblement verticale et pas l'autre.

Avantageusement, le chargeur comprend une glissière à même de guider le magasin selon une direction montante.

Avantageusement, la glissière est à même de guider le magasin selon une direction sensiblement verticale.

Avantageusement, le chargeur comprend le magasin ou l'un au moins des magasins, le dispositif de manœuvre étant à même de manœuvrer le magasin de manière à amener successivement plusieurs réceptacles de ce magasin chacun devant la zone de déchargement.

Avantageusement, le chargeur comprend le magasin ou l'un au moins des magasins, le magasin comportant des réceptacles qui se succèdent dans un plan sensiblement vertical lorsque le magasin est monté de manière à pouvoir être manœuvré par le dispositif de manoeuvre.

Avantageusement, le chargeur comprend le magasin ou l'un au moins des magasins, le magasin comportant au moins une succession de réceptacles, cette succession de réceptacles étant sensiblement verticale lorsque le magasin est monté de manière à pouvoir être manœuvré par le dispositif de manoeuvre.

Avantageusement, le chargeur comprend un dispositif de transfert à même de transférer un objet entre le magasin et la zone de déchargement.

L'invention a également pour objet une installation comprenant un chargeur tel que défini plus haut et une machine, le chargeur étant à même de donner et /ou de prendre des objets à la machine.

L'installation définie ci-dessus peut incorporer une ou plusieurs autres caractéristiques avantageuses, isolément ou en combinaison, en particulier parmi celles définies ci-après.

Avantageusement, la machine est une machine d'usinage.

### Brève description des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue schématique, en perspective, d'une installation comportant un chargeur selon un mode de réalisation de l'invention et une machine à laquelle est associé ce chargeur,
- la figure 2 est une vue schématique, en perspective, d'une portion agrandie du chargeur représenté sur la figure 1,
- la figure 3 est une vue schématique, en perspective, d'un sous-ensemble constitutif du chargeur représenté sur la figure 1,
- les figures 4 à 6 sont trois schémas analogues qui représentent la même installation que la figure 1 et qui illustrent comment procède le sous-ensemble de la figure 3 pour donner un objet à la machine.

### Description d'un mode préférentiel de l'invention

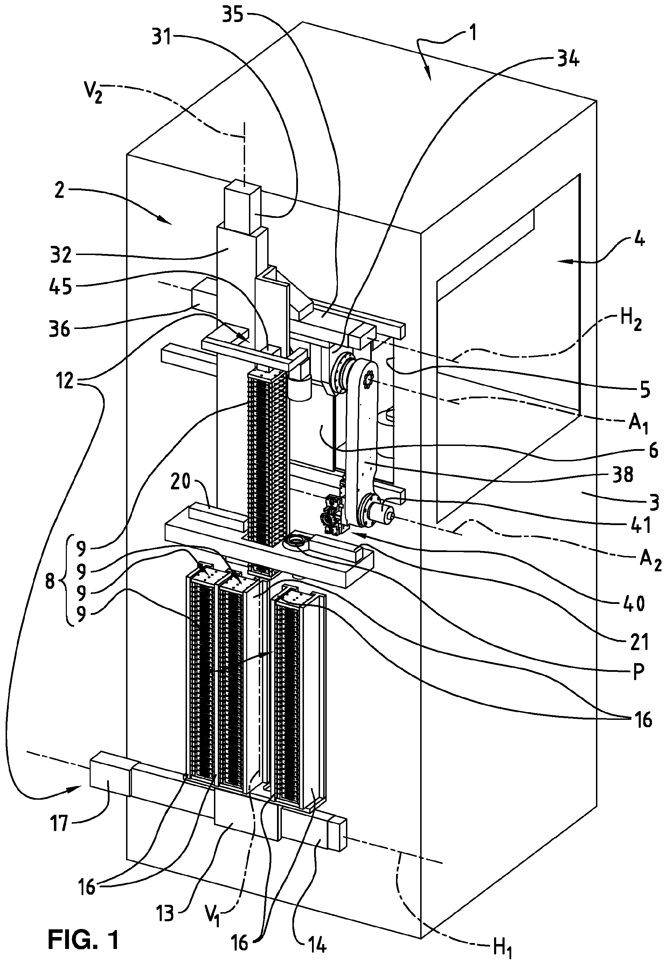

Sur la figure 1 est représentée une installation qui comprend une machine 1 et un chargeur 2 selon un mode de réalisation de l'invention. Le chargeur 2 est associée à la machine 1 de manière à pouvoir donner et prendre des objets un par un à cette machine 1.

De préférence, le chargeur 2 comporte une armoire ou enveloppe de protection à l'intérieur de laquelle se trouvent les autres constituants de ce chargeur 2. Sur la figure 1, cette armoire ou enveloppe de protection du chargeur 2 n'est pas représentée dans un souci de clarté, bien qu'elle existe dans le mode de réalisation représenté sur les figures 1 à 6. Le chargeur 2 comporte également un bâti fixe et au moins une unité électronique de contrôle et de pilotage, qui ne sont pas représentés eux non plus dans un souci de clarté. Cette unité électronique de contrôle et de pilotage est à même de communiquer avec la machine 1.

La machine 1 peut être, par exemple, une machine d'usinage, une machine de découpe ou une machine pour appliquer un revêtement ou une peinture sur les objets, ou bien encore une machine pour appliquer un traitement de surface aux objets. Elle possède une enveloppe 3 qui renferme divers constituant tels que des alimentations, une unité de pilotage, plusieurs mécanismes, des entraînements, etc.

L'enveloppe 3 délimite une chambre 4 où la machine 1 peut réaliser au moins une opération sur un objet ou simultanément sur plusieurs objets. Un ou plusieurs outils prévus pour effectuer au moins cette opération sont présents dans la chambre 4 et ne sont pas représentés sur la figure 1 dans un souci de clarté. Un ou plusieurs dispositifs de support et de retenue à même au moins d'immobiliser chacun un objet sont également présents dans la chambre 4 et ne sont pas représentés dans un souci de clarté.

Les objets sur lesquels une ou plusieurs opérations sont effectuées par la machine 1, dans la chambre 4, peuvent être, par exemple, des pièces en cours de réalisation ou des ébauches de pièce, notamment des éléments de pièce d'horlogerie tels que des carrures de boîte de montre, des fonds de boîte de montre, des glaces, des platines, des cadrans, des lunettes ou d'autres éléments pouvant être posés à plat. Un seul exemplaire d'un tel objet pouvant subir une opération dans la machine 1 est représenté sur la figure 1, où il est désigné par la référence P.

Lorsqu'elle n'est pas obturée par un volet coulissant 6, une ouverture 5 dans une paroi de l'enveloppe 3 met en communication la chambre 4 et le volume intérieur du chargeur 2.

Le chargeur 2 se trouve sur un seul des différents côtés de la machine 1. Il comporte un dispositif de stockage 8 comprenant plusieurs magasins 9 chacun prévu pour stocker plusieurs objets P.

Le chargeur 2 comporte un dispositif de manœuvre 12 à même de manœuvrer les magasins 9 à la fois ensemble, parallèlement à une direction H₁ horizontale, et individuellement selon une direction montante V₁, qui est verticale dans le mode de réalisation représenté sur la figure 1.

Une coulisse numérique 13 du dispositif de manœuvre 12 est montée sur un rail de guidage 14 qui la supporte et la guide selon la direction H₁. Un entraînement 17 est prévu pour mouvoir la coulisse numérique 13 le long du rail de guidage 14.

La coulisse numérique 13 porte et transporte une rangée de plusieurs glissières 16, dans chacune desquelles un des magasins 9 est monté de manière à être amovible. Chaque glissière 16 est à même de guider un magasin 9 selon la direction montante V₁. Chaque glissière 16 a une extrémité inférieure fermée par un fond. Lorsqu'il n'est pas soulevé, un magasin 9 monté de manière à pouvoir être manœuvré par le dispositif de manœuvre 12 repose sur le fond de la glissière 16 qui le reçoit.

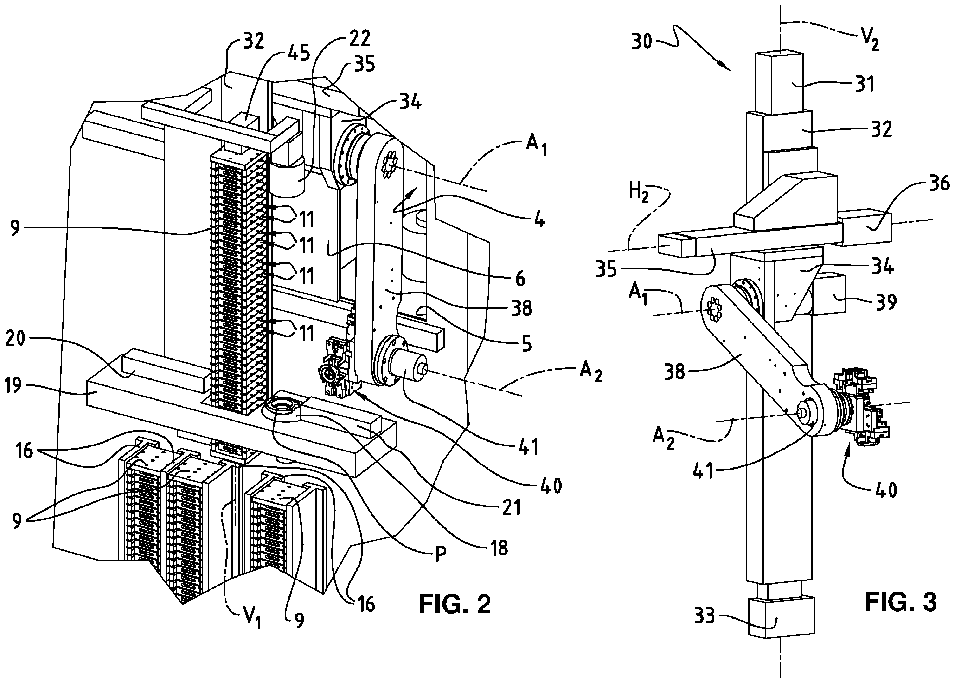

Ainsi qu'on peut le voir sur la figure 2, chaque magasin 9 comporte une succession de réceptacles 11. Avant de subir une ou plusieurs opérations dans la machine 1, chaque objet P est en attente dans l'un des réceptacles 11. Après avoir subi une ou plusieurs opérations dans la machine 1, chaque objet P est rangé dans un réceptacle 11, qui peut être le même que celui où il attendait avant de passer dans la machine 1.

Les réceptacles 11 d'un magasin 9 quelconque se succèdent selon une direction, qui est parallèle à la direction montante V₁ lorsque ce magasin 9 est monté dans une glissière 16.

Dans le mode de réalisation représenté sur les figures 1 à 6, la capacité du chargeur 2 est de quatre magasins 9. Toutefois, il peut en être autrement. Lorsqu'un chargeur selon l'invention a une capacité de plusieurs magasins 9, cette capacité peut être inférieure ou supérieur à quatre magasins 9. De plus, un chargeur selon l'invention peut avoir une capacité de seulement un magasin 9.

Le chargeur 2 comporte un plateau rotatif 18, dont le dessus forme une zone de déchargement des objets P depuis les réceptacles 11. Le plateau rotatif 18 équipe une tablette 19 qui est également pourvue de deux poussoirs dirigés l'un vers l'autre, à savoir un poussoir 20 d'évacuation d'un objet P hors d'un réceptacle 11, vers le dessus du plateau rotatif 18, et un poussoir 21 de chargement d'un objet P dans un réceptacle 11, depuis le dessus du plateau rotatif 18. Les poussoirs 20 et 21 forment un dispositif de transfert à même de transférer un objet P entre un magasin 9 et la zone de déchargement susmentionnée. Les poussoirs 20 et 21 peuvent être choisis parmi plusieurs types différents d'équipement de manœuvre. Par exemple, chacun des poussoirs 20 et 21 peut comporter un vérin pneumatique.

Une caméra optique 22 est dirigée vers le dessus du plateau rotatif 18, qui est lumineux. Le plateau rotatif 18, la caméra optique 22 et une unité de contrôle et de commande non représentée font partie d'un système de détermination d'un angle de pivotement entre une position angulaire prédéfinie pour un objet et un exemplaire réel de cet objet reposant sur le plateau rotatif 18, et de suppression de cet angle de pivotement par un pivotement du plateau rotatif 18.

Un sous-ensemble 30 du chargeur 2 est représenté seul sur la figure 3. Ce sous-ensemble 30 est prévu pour saisir un objet P sur le plateau rotatif 18, le transférer ensuite vers la machine 1, puis donner ou déposer cet objet P en un endroit précis dans la chambre 4. Le sous-ensemble 30 est également prévu pour saisir un objet P en un endroit précis dans la chambre 4, le transférer ensuite hors de la machine 1, puis déposer cet objet P sur le plateau rotatif 18.

Le sous-ensemble 30 comprend un guide 31 de guidage selon une direction de guidage V₂ montante, qui est de préférence verticale, ce qui est le cas dans le mode de réalisation représenté sur les figures 1 à 6. Un coulisseau 32 est monté sur le guide 31 et guidé par ce guide 31 selon la direction de guidage V₂. Un actionneur 33 est à même de déplacer et de positionner le coulisseau 32 le long du guide 31.

Un charriot 34 est monté sur un rail 35 du coulisseau 32 de manière à être guidé selon une direction de coulissement H₂, par rapport à ce coulisseau 32. L'actionneur 33 est un premier actionneur. Un deuxième actionneur 36 est à même de déplacer et de positionner le charriot 34 par rapport au coulisseau 32, selon la direction de coulissement H₂.

Les actionneurs 33 et 36 peuvent être choisis parmi plusieurs types différents d'équipement de manœuvre. Par exemple, chacun des actionneurs 33 et 36 peut comporter une vis à billes et un moteur électrique prévu pour faire pivoter cette vis à billes sur son axe. Selon une autre possibilité, chacun des actionneurs 33 et 36 peut comporter une courroie entraînée par un moteur électrique.

Un bras 38 est articulé au charriot 34 de manière à pouvoir basculer autour d'un premier axe de pivotement A₁. Le bras 38 est ainsi porté indirectement par le coulisseau 32, par rapport auquel il est à même de basculer autour du premier axe de pivotement A₁. Un dispositif d'actionnement constitué d'un moteur 39 est à même de faire basculer et de positionner angulairement le bras 38 autour du premier axe de pivotement A₁, par rapport au charriot 34 et au coulisseau 32.

Une tête 40 est portée par une extrémité distale du bras 38. Dans le mode de réalisation représenté sur les figures 1 à 6, il s'agit d'une tête de saisie d'un objet P. Toutefois, la tête 40 peut également être une tête de support d'un objet P, c'est-à-dire une tête sur laquelle peut être déposé un objet P. C'est pourquoi la tête 40 est appelé une tête de saisie et/ou de support dans ce qui suit.

La tête de saisie et/ou de support 40 est montée à pivotement de manière à pouvoir pivoter par rapport au bras 38, autour d'un deuxième axe de pivotement A₂, qui est parallèle au premier axe de pivotement A₁. Un dispositif d'actionnement formé par un moteur 41 est à même de faire pivoter et de positionner angulairement la tête de saisie et/ou de support 40 par rapport au bras 38, autour du deuxième axe de pivotement A₂.

En plus de la coulisse numérique 13, le dispositif de manœuvre 12 comporte le coulisseau 32, l'actionneur 33 et un dispositif d'accouplement 45 visible sur les figures 1 et 2. Ce dispositif d'accouplement 45 est porté par le coulisseau 32 et est à même de s'accrocher temporairement à l'extrémité supérieure de n'importe quel magasin 9 ou à un organe fixé à cette extrémité supérieure. De la sorte, le dispositif d'accouplement 45 est à même d'accoupler temporairement n'importe quel magasin 9 au coulisseau 32.

Par l'intermédiaire du coulisseau 32, l'actionneur 33 peut soulever et faire monter n'importe quel magasin 9 accouplé à ce coulisseau 32 par le dispositif d'accouplement 45. Par l'intermédiaire du coulisseau 32, l'actionneur 33 peut contrôler la descente de n'importe quel magasin 9 sous son propre poids, lorsque ce magasin 9 est accouplé au coulisseau 32 par le dispositif d'accouplement 45.

Ainsi qu'on peut bien le comprendre à partir de la figure 1, un magasin 9 sélectionné parmi les magasins 9 est placé à l'aplomb du dispositif d'accouplement 45 par la coulisse numérique 13. Ensuite, le dispositif d'accouplement 45 accouple le magasin 9 sélectionné au coulisseau 32. Après cela, l'actionneur 33 lève le magasin 9 sélectionné et peut ainsi amener n'importe lequel des réceptacles 11 de ce magasin 9 sélectionné devant la zone de déchargement formée par le dessus du plateau rotatif 18. Le dispositif de manœuvre 12 est donc à même de manœuvrer n'importe quel magasin 9 de manière à amener n'importe quel réceptacle 11 de ce magasin 9 devant la zone de déchargement formée par le dessus du plateau rotatif 18.

Bien que le dispositif de manœuvre 12 comporte le coulisseau 32, l'actionneur 33 et un dispositif d'accouplement 45 dans le mode de réalisation des figures 1 à 6, il peut en être autrement. En particulier, le dispositif de manœuvre des magasins 9 peut être totalement indépendant du sous-ensemble 30. Lorsque tel est le cas, un actionneur porté par la coulisse numérique 13 peut être prévu pour lever chaque magasin 9 individuellement ou les magasins 9 tous ensemble et pour contrôler sa ou leur descente.

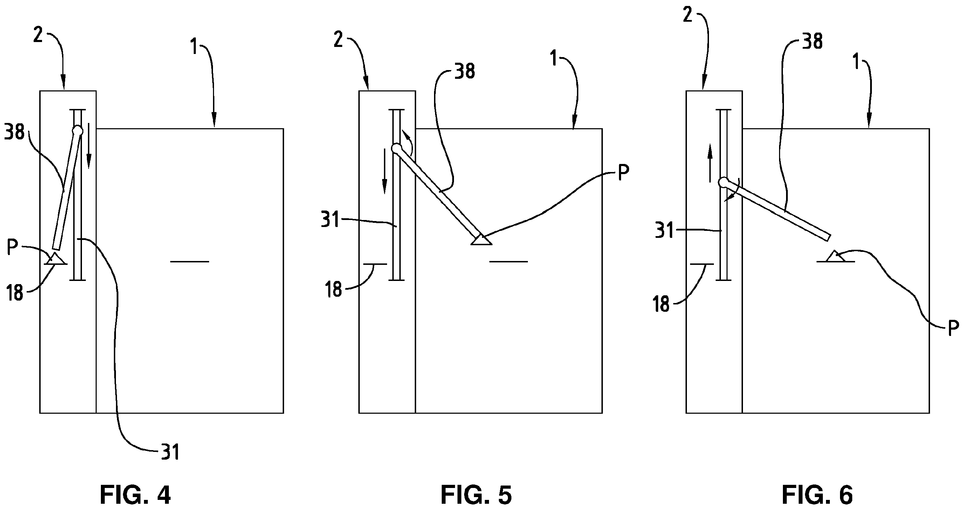

Sur la figure 4, un objet P a été placé sur le plateau rotatif 18. Les figures 4 à 6 illustre comment le sous-ensemble 30 transfère cet objet P du plateau rotatif 18 à un endroit précis dans la chambre 4 de la machine 1.

Sur la figure 4, l'actionneur 33 fait descendre le coulisseau 32 si bien que le bras 38 descend et que la tête de saisie et/ou de support 40 se rapproche de l'objet P. Une fois qu'elle est assez proche de l'objet P, la tête de saisie et/ou de support 40 saisit cet objet P, puis l'actionneur 33 fait remonter le coulisseau 32.

Ensuite, le moteur 39 fait basculer le bras 38 autour du premier axe de pivotement A₁, vers la machine 1, de manière que ce bras 38 pénètre dans la chambre 4 et y introduise l'objet P. Le moteur 39 continue ensuite de faire basculer le bras 38 dans le même sens afin d'amener l'objet P plus loin dans la chambre 4. Simultanément, l'actionneur 33 fait descendre le coulisseau 32 de manière à compenser l'effet du basculement du bras 38 sur l'altitude de l'objet P, ce qui a lieu sur la figure 5. De la sorte, l'objet P est amené au-dessus d'un endroit précis dans la chambre 4. Ensuite, il est déposé à cet endroit précis.

Lors du transfert de l'objet P, le moteur 41 fait tourner tête de saisie et/ou de support 40 autour du deuxième axe de pivotement A₂ de manière que l'objet P possède l'orientation voulue lorsqu'il est déposé dans la chambre 4.

Sur la figure 6, l'objet P a été déposé dans la chambre 4 et le bras 38 est basculé vers l'extérieur de la machine 1, tandis que le coulisseau 32 est remonté.

Plus tard, la machine 1 effectue une ou plusieurs opérations sur l'objet P dans la chambre 4. Pour ramener ensuite l'objet P de la chambre 4 au plateau rotatif 18, le sous-ensemble 30 procède de la manière inverse de celle décrite ci-dessus.

L'invention ne se limite pas au mode de réalisation décrit précédemment. En particulier, le chargeur peut ne pas comporter le moteur 41. Lorsque tel est le cas, le bras 38 peut faire partie d'un parallélogramme articulé tel que l'orientation de la tête de saisie et/ou de support 40 reste constante quelle que soit l'inclinaison du bras 38 par rapport à la verticale.

Par ailleurs, le bras 38 pourrait être articulé directement au coulisseau 32. Lorsque tel est le cas, un coulissement selon la direction de coulissement H₂ peut être rendu possible entre le bâti fixe du chargeur et le guide 31, ou bien entre le bras 38 et la tête de saisie et/ou de support 40. En outre, l'actionneur 36 peut être remplacé par un dispositif permettant un réglage manuel selon la direction de coulissement H₂.

En variante, la possibilité d'un déplacement de tout ou partie du sous-ensemble 30 y compris la tête de saisie et/ou de support 40, parallèlement à la direction de coulissement H₂, peut également être supprimée.

Par ailleurs, au lieu de l'être dans des magasins 9 coulissants, les objets P pourraient être stockés dans au moins une hélice rotative, de préférence verticale, pouvant mouvoir les objets P parallèlement à sa longueur en étant pivotée sur elle-même.

## Revendications

1. Chargeur pour donner et/ou prendre des objets à une machine, comprenant une tête (40) de saisie et/ou de support d'au moins un objet, **caractérisé en ce qu'**il comprend :
- un guide (31),
- un coulisseau (32) guidé par le guide (31) selon une direction de guidage (V₂) montante,
- un actionneur (33) à même de déplacer et de positionner le coulisseau (32) le long du guide (31),
- un bras (38) porté directement ou indirectement par le coulisseau (32) et monté à pivotement de manière à pouvoir basculer par rapport à ce coulisseau (32), autour d'un premier axe de pivotement (A₁), non vertical,
- un dispositif d'actionnement (39) à même de faire basculer et de positionner angulairement le bras (38) autour du premier axe de pivotement (A₁), par rapport au coulisseau (32),
la tête de saisie et/ou de support (40) étant portée par le bras (38), à distance du premier axe de pivotement (A₁), et montée à pivotement de manière à pouvoir pivoter par rapport au bras (38), autour d'un deuxième axe de pivotement (A₂) sensiblement parallèle au premier axe de pivotement (A₁).

2. Chargeur selon la revendication 1, **caractérisé en ce que** la direction de guidage (V₂) est sensiblement verticale.

3. Chargeur selon la revendication 1 ou 2, **caractérise en ce que** le premier axe de pivotement (A₁) est sensiblement horizontal.

4. Chargeur selon l'une des revendications précédentes, **caractérisé en ce que** le dispositif d'actionnement est un premier dispositif d'actionnement (39), le chargeur comprenant un deuxième dispositif d'actionnement (41) à même de faire pivoter et de positionner angulairement la tête de saisie et/ou de support (40) par rapport au bras (38), autour du deuxième axe de pivotement (A₂).

5. Chargeur selon l'une des revendications précédentes, **caractérisé en ce qu'**au moins une partie du chargeur est déplaçable selon une direction de coulissement (H₂) non orthogonale au premier axe de pivotement (A₁) et comprend la tête de saisie et/ou de support (40).

6. Chargeur selon l'une des revendications précédentes, **caractérisé en ce qu'**il comprend une zone (18) de déchargement d'un objet depuis un magasin de stockage de plusieurs objets, cette zone de déchargement (18) étant à la portée de la tête de saisie et/ou de support (40).

7. Chargeur selon l'une des revendications précédentes, **caractérisé en ce que** le chargeur comprend un dispositif de manœuvre (12) à même de manœuvrer au moins un magasin (9) de stockage de plusieurs objets.

8. Chargeur selon la revendication 7, **caractérisé en ce que** le dispositif de manœuvre (12) comprend le coulisseau (32), un dispositif (45) d'accouplement temporaire du magasin (9) à ce coulisseau (32), ainsi que l'actionneur (33) à même de déplacer et de positionner le coulisseau (32) le long du guide (31).

9. Chargeur selon l'une des revendications 7 et 8, **caractérisé en ce que** le dispositif de manœuvre (12) est à même de faire monter le magasin (9).

10. Chargeur selon l'une des revendications 7 à 9, **caractérisé en ce qu'**il comprend une glissière (16) à même de guider le magasin (9) selon une direction montante (V₁), le dispositif de manœuvre (12) étant à même de manœuvrer un magasin (9) monté dans cette glissière (16).

11. Chargeur selon la revendication 6 et l'une des revendications 7 à 10, **caractérisé en ce qu'**il comprend le magasin (9) ou l'un au moins des magasins (9), le dispositif de manœuvre (12) étant à même de manœuvrer le magasin (9) de manière à amener successivement plusieurs réceptacles (11) de ce magasin (9) chacun devant la zone de déchargement (18).

12. Chargeur selon l'une des revendications 7 à 11, **caractérisé en ce qu'**il comprend le magasin (9) ou l'un au moins des magasins (9), le magasin (9) comportant des réceptacles (11) qui se succèdent dans un plan sensiblement vertical lorsque le magasin (9) est monté de manière à pouvoir être manœuvré par le dispositif de manœuvre (12).

13. Chargeur selon l'une des revendications 7 à 12, **caractérisé en ce qu'**il comprend le magasin (9) ou l'un au moins des magasins (9), le magasin (9) comportant au moins une succession de réceptacles (11), cette succession de réceptacles (11) étant sensiblement verticale lorsque le magasin (9) est monté de manière à pouvoir être manœuvré par le dispositif de manœuvre (12).

14. Installation comprenant un chargeur (2) selon l'une des revendications précédentes et une machine (1), le chargeur (2) étant à même de donner et /ou de prendre des objets à la machine (1).
